# EUROPEAN PATENT APPLICATION

(11) **EP 4 529 158 A1**
(43) Date of publication of application: **26.03.2025**
(21) Application number: 23806921.5
(22) Date of filing: 16.05.2023
(51) Int. Cl.: H04N 13/246

(54) **METHOD FOR CAPTURING 3D PICTURE, AND 3D PHOTOGRAPHIC SYSTEM**

(30) Priority: 20.05.2022 CN 202210566934
(71) Applicant: Guang Dong Future Technology Co., Ltd., Shenzhen, Guangdong 518000 (CN)
(72) Inventor: HE, Shu, Shenzhen, Guangdong 518000 (CN); XU, Wanliang, Shenzhen, Guangdong 518000 (CN)
(74) Representative: Winter, Brandl - Partnerschaft mbB
(86) International application number: PCT/CN2023/094471
(87) International publication number: WO 2023/221969

(57) **Abstract**

Provided in the present application are a method for capturing a 3D picture, and a 3D photographic system,which are used for realizing stereoscopic photography at a low cost in a simpler and more convenient manner. The method for capturing a 3D picture is applied to a mobile device having a camera,wherein a target peripheral is mounted on the mobile device. The method comprises: photographing a calibration plate by means of a camera,and obtaining a first left view and a first right view by means of a lens of a target peripheral;performing a calibration operation on a mobile device according to the first left view and the first right view; photographing a target scene by means of the camera,so as to obtain a second left view and a second right view; and performing stitching according to the second left view and the second right view,so as to obtain a 3D picture.

## Description

### TECHNICAL FIELD

The present application relates to the technical field of 3D image displaying, and in particular to a 3D image capturing method and a 3D image capturing system.

### BACKGROUND

Digital stereoscopic images have developed greatly with the popularity of digital image input and output devices. In the related art, there are two ways to obtain a three-dimensional (3D) digital image. One is to capture with a professional 3D digital camera. The biggest change that the 3D digital camera does is to splice images synchronizally collected by two CCD sensors, and then immediately carry out a process to obtain a high-quality image in real time. However, this kind of digital camera is not versatile and is not suitable for shooting under various conditions and for various purposes. The other is to achieve the purpose of 3D photography by shooting the same object from different directions with two ordinary digital cameras or video cameras. However, at now, when two cameras are shooting in parallel, the axis distance between the lenses cannot be too small due to the size of the camera. This results in the inability to shoot close-up shots or poor three-dimensional effects, which can cause dizziness, nausea, and extreme eye discomfort. The 3D camera used to shoot movies is composed of two cameras which are vertical to each other. This equipment is huge, too heavy, and difficult to be moved. It generally has a complex structure in order to adjust the angle and position of the two cameras, which virtually increases the cost of production and use. Its price is relatively expensive and difficult to be accepted by ordinary consumers.

Therefore, how to make the shooting of stereoscopic images easier and more cost-effective is an urgent problem that those skilled in the art need to solve.

### SUMMARY

The present application provides a 3D image capturing method and a 3D image capturing system for achieving stereoscopic shooting more simply and at low cost.

A first aspect of the embodiments of the present application provides a 3D image capturing method, which includes:
installing a target peripheral on the mobile device;
capturing a calibration target through the camera, and obtaining a first left image and a first right image with a lens of the target peripheral;
performing a calibration operation on the mobile device according to the first left-view image and the first right-view image;
obtaining a second left-view image and a second right-view image by employing the camera to capture a target scene; and
splicing the second left-view image and the second right-view image to obtain a 3D image.

A second aspect of the embodiments of the present application provides a 3D image capturing system including a mobile device with a camera and a target peripheral, the target peripheral being installed on the mobile device, the 3D image capturing system further includes:
the camera configured to capture a calibration target and obtain a first left-view image and a first right-view image with a lens of the target peripheral;
a calibration unit configured to perform calibration operations on the mobile device according to the first left-view image and the first right-view image;
the camera is also configured to capture a target scene to obtain a second left-view image and a second right-view image;
a splicing unit configured to splice the second left-view image and the second right-view image to obtain a 3D image.

A third aspect of the embodiments of the present application provides a server which includes at least one processor, memory and transceiver connected therewith, the memory is configured to store program codes, and the processor is configured to call the program codes in the memory to execute the 3D image capturing method above related to the second aspect.

In summary, it can be seen that in the embodiments provided by this application, a target peripheral is installed on the mobile device, the calibration target is photographed through the camera, and a first left-view image and a first right-view image is obtained through the lens of the target peripheral; a calibration operation is performed on the mobile device according to the first left-view image and the first right-view image, the target scene is captured through the camera to obtain a second left-view image and a second right-view image, and the second left-view image and the second right-view image are spliced to obtain a 3D picture. It can be seen that by installing peripherals, ordinary mobile devices equipped with cameras can perform 3D stereoscopic capturing by installing a peripheral device. The installation of the peripheral device is carried out conveniently and easily, and there is no need to modify the mobile device itself. Furthermore, with the algorithm provided in the embodiments of the present application, stereoscopic shooting can be realized in a simple way with low cost.

### BRIEF DESCRIPTION OF THE DRAWINGS

FIG 1 is a schematic flowchart of a 3D image capturing method according to an embodiment of the present application.
FIG 1A is a schematic diagram showing captured images of a calibration target according to a possible embodiment of the present application.
FIG 1B is a schematic diagram showing coordinates of a left block according to a possible embodiment of the present application.
FIG 2 is a schematic diagram showing a structure of a 3D image capturing system according to an embodiment of the present application.
FIG 3 is a schematic diagram of hardware structures of a server according to an embodiment of the present application.

### DETAILED DESCRIPTION OF THE EMBODIMENTS

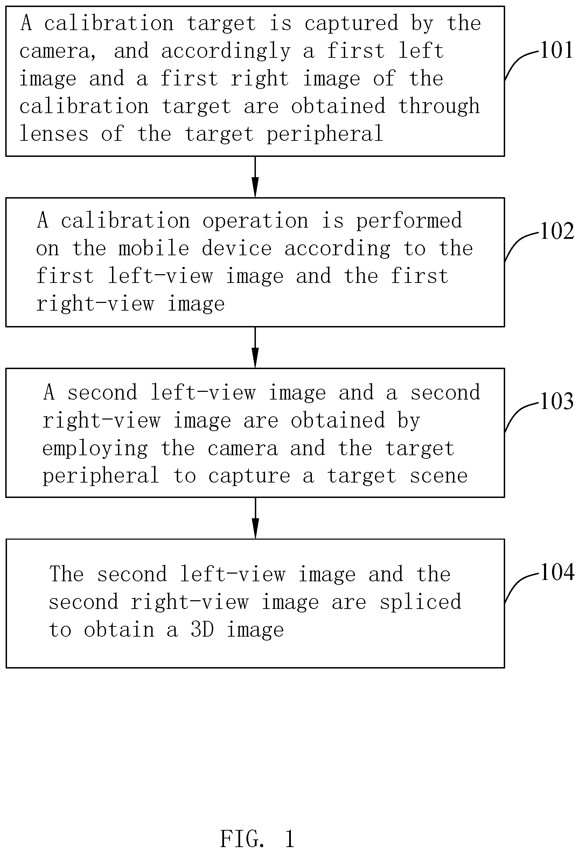

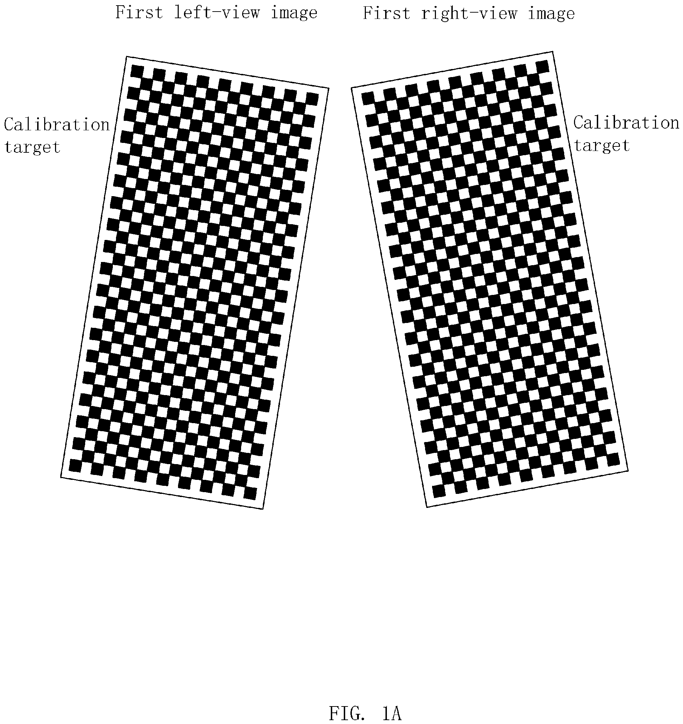

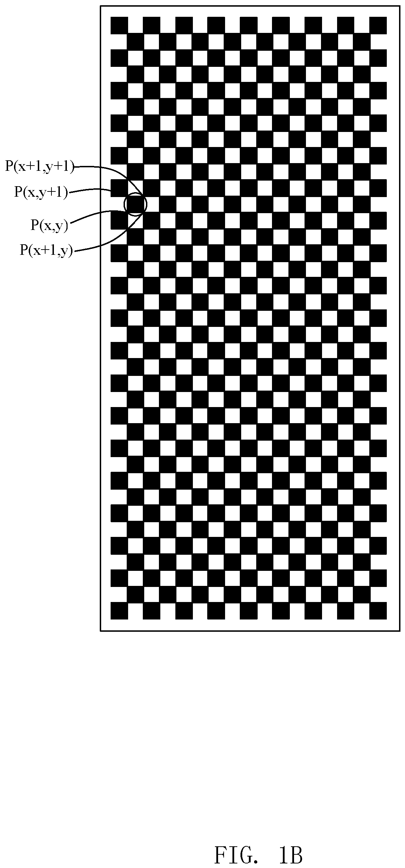

Referring to FIG 1, FIG 1 is a schematic flowchart of a 3D image capturing method according to an embodiment of the present application. The method includes following blocks.

In block 101, a calibration target is captured through the camera, and accordingly a first left image and a first right image are obtained through a lens of the target peripheral.

An embodiment of the present application is applied to a mobile device with a camera, and the target peripheral is installed on the mobile device. Calibration needs to be carried out after the target peripheral is installed, thereby to obtain a good capturing effect of 3D images.

Firstly, the calibration target is captured through the camera. The calibration target can be a plate with a calibration pattern which can be a checkered pattern, a dot pattern, or the like. For convenience of description, a calibration target with a checkered pattern is taken as an example to illustrate this embodiment of the present application. A left image and a right image are generated through the refraction of the lens of the target peripheral. For better calibration, it is needed that the calibration target is wholly presented in both the left image and the right image, and an image of the calibration target should occupy as much area as possible in each of the left and right images. Therefore, after the left image and the right image are generated, whether the whole of the calibration target is presented in the left image and the right image, and whether a ratio of a size of the image of the calibration target to a size of the left image and a ratio of the size of the image of the calibration target to a size of the right image are both greater than a preset value are determined. If the answer is yes, the left image and the right image are taken as a first left-view image and a first right-view image correspondingly. Referring to FIG 1A, it shows the first left-view image and the right-view image which are likely generated. That is, the camera captures the calibration target, for the refraction of the lens of the target peripheral, a left stereoscopic image and a right stereoscopic image having parallax related to each other, namely the first left-view image and the first right-view image, are generated.

In block 102, a calibration operation is performed on the mobile device according to the first left-view image and the first right-view image.

After the first left-view image and the first right-view image are generated, left corner points and right corner points are respectively detected on the first left-view image and the first right-view image. The number of the left corner points and the number of the right corner points are both M*N. An area where the left corner points are located is divided according to the LA method to obtain a left block set and a target left block is determined, and an area where the right corner points are located is divided to obtain a right block set and a target right block is determined. The target left block is the one with a shape more approximating a square among blocks in the left block set, and the target right block is the one with a shape more approximating a square among blocks in the right block set. An optimal length is determined according to the target left block and the target right block to calibrate the mobile device.

The operation of dividing the area where the left corner points are located to obtain the left block set and determining the target left block includes: dividing the area where the left corner points are located into (M-1)*(N-1) left blocks, and determining coordinates of each left block; and determining a length difference between two adjacent sides of each left block according to the coordinates of each left block. The length difference is not less than 0. The length difference between the two adjacent sides of a first left block is calculated according to the following formula: DI=∥P(x, y)-P(x+1, y)|-|P(x, y)-P(x, y+1)∥.

DI represents the length difference between the two adjacent sides of each left block. Coordinates of the first left block are LA(x, y)=(P(x, y), P(x+1, y), P(x, y+1), P(x+1, y+1)), 0<x <M, 0<y<N. The first left block can be any block of the left block set. After the length difference between the two adjacent sides of each block in the left block set are obtained, the left block with the minimum length difference is determined to be the target left block. Referring to FIG. 1B, it shows a schematic diagram of coordinates of the first left block according to an embodiment of the present application.

Similarly, the target right block is determined in the same way, and details will not be repeated here.

That is, in embodiments of the present application, the calibration target having a checkered pattern is taken as an example for illustration purpose. For the refraction in the capturing process, the divided image blocks are deformed and have distortion. Therefore, the target left block in the left block set and the target right block in the right block set are determined, and the target left block is the one with the minimum length difference among the blocks of the left block set and the target right block is the one with the minimum length difference among the blocks of the right block set. That is, the target left block is the one with a shape more approximating a square among blocks in the left block set, and the target right block looks the most like a square among blocks in the right block set.

After the target left block and the target right block are determined, the optimal length is determined according to the target left block and the target right block. In an embodiment, a first average side length of the target left block and a second average side length of the target right block are calculated. It should be noted that the first average side length of the target left block is calculated according to the following formula:
L0=(|P(x1, y1)-P(x1+1, y1)|+|P(x1, 1, y1)-P(x1, y1+1)|+|P(x1+1, y1+ 1)-P(x1+1, y1)|+|P(x1+1, y1+1)-P(x1, y1+1)|)/4, where the coordinates of the target left block are (P(x1, y1), P(x1+1, y1), P(x1, y1+1), P(x1+1, y1+1). Similarly, the second average side length of the target right block can also be obtained.

The smaller one of the first average side length and the second average side length is taken as the optimal length. After the optimal length is determined, a target block for calibration is selected. In embodiments of the present application, block P1 is selected as the target block, and coordinates of the block PI are P1=[[0, 0], [L, 0], [0, L], [L, L]]. The P1 block is taken as the target, and perspective transformation is performed to obtain transformed coordinates of each block PTL (x, y), where PTL (x, y) represents a square, that is, the calibration process is realized.

In block 103, a second left-view image and a second right-view image are obtained by employing the camera to capture a target scene.

After the calibration is completed, the target scene is captured through the camera to obtain the second left-view image and the second right-view image, and a 3D image is obtained based on the second left-view image and the second right-view image.

In block 104, the second left-view image and the second right-view image are spliced to obtain a 3D image.

The second left-view image and the second right-view image are divided according to the above LA method to obtain left original points and right original points correspondingly. Perspective transformations on each left original point and each right original point are carried out, and each left transformation point corresponding to each left original point is obtained. Perspective transformation on each left original point is performed to obtain each left transformation point corresponding to each left original point and each right transformation corresponding to each right original point. The essence of the perspective transformation, is to project an image to a new visual plane, and it is the visual expression of distance in space that an object is smaller when it is far away and becomes larger when it comes nearer. The process can be that: converting a two-dimensional coordinate system into a three-dimensional coordinate system, and then projecting the three-dimensional coordinate system to a new two-dimensional coordinate system. This process is a nonlinear transformation process. Perspective transformation is a common data processing method in the related art, and will not be described in detail in the present application.

After the left transformation points and the right transformation points are obtained, the left transformation points are spliced to obtain a left transformation image, and the right transformation points are spliced to obtain a right transformation image. The left transformation image and the right transformation image are spliced to obtain the 3D image.

In embodiments of the present application, ordinary mobile devices equipped with cameras can perform 3D stereoscopic capturing by installing a peripheral device. The installation of the peripheral device is carried out conveniently and easily, and there is no need to modify the mobile device itself. Furthermore, with the algorithm provided in the embodiments of the present application, stereoscopic shooting can be realized in a simple way with low cost.

Some embodiments of the present application are described above from the perspective of the 3D image capturing method, and in the following some other embodiments of the present application will be described from the perspective of a 3D image capturing system.

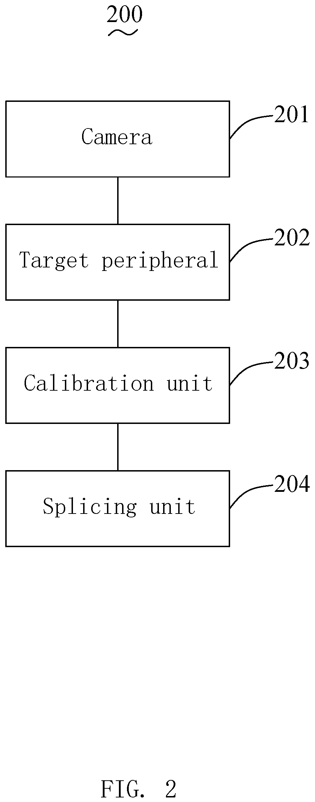

Referring to FIG. 2. FIG 2 is a schematic virtual structural diagram of the 3D image capturing system according to an embodiment of the present application. The 3D image capturing system 200 includes a mobile device and a target peripheral 202. The mobile device includes a camera 201. The target peripheral 202 is installed on the mobile device. The 3D image capturing system includes:
the camera 201, configured to capture a calibration target and obtain a first left-view image and a first right-view image with a lens of the target peripheral;
a calibration unit 203, configured to perform calibration operations on the mobile device according to the first left-view image and the first right-view image;
the camera 201 is also configured to capture a target scene to obtain a second left-view image and a second right-view image;
a splicing unit 204, configured to splice the second left-view image and the second right-view image to obtain a 3D image.

Optionally, the camera 201 is further configured to:
capture the calibration target;
generate a left image and a right image through refraction of the lens of the target peripheral;
determine whether the whole of the calibration target is presented in the left image and the right image, and whether a ratio of a size of the image of the calibration target to a size of the left image and a ratio of the size of the image of the calibration target to a size of the right image are both greater than a preset value; and
in a condition that the whole of the calibration target is presented in the left image and the right image and the ratio of the size of the image of the calibration target to the size of the left image and the ratio of the size of the image of the calibration target to the size of the right image are both greater than a preset value, the left image and the right image are taken as the first left-view image and the first right-view image correspondingly.

Optionally, the calibration unit 203 is further configured to:
detect left corner points and right corner points on the first left-view image and the first right-view image correspondingly, the number of the left corner points and the number of the right corner points being both M*N;
divide an area where the left corner points are located to obtain a left block set and determine a target left block, and divide an area where the right corner points are located to obtain a right block set and determine a target right block, the target left block being the one with a shape more approximating a square among blocks in the left block set, and the target right block being the one with a shape more approximating a square among blocks in the right block set;
determine an optimal length according to the target left block and the target right block to calibrate the mobile device.

Optionally, the calibration unit is further configured to:
divide the area where the left corner points are located into left blocks, the number of the left blocks being (M-1)*(N-1), and determine coordinates of each left block;
determine a length difference between two adjacent sides of each left block according to the coordinates of each left block, the length difference being not less than 0;
determine a left block with the minimum length difference as the target left block.

Optionally, the calibration unit is further configured to:
calculate the length difference between two adjacent sides of a first left square according to a formula: DI=||P(x, y)-P(x+1, y)|-|P(x, y)-P(x, y+1)∥, where DI represents the length difference between the two adjacent sides of each left block, and coordinates of the first left block are LA(x, y)=(P(x, y), P(x+1, y), P(x, y+1), P(x+1, y+1)), 0<x<M , 0<y<N, and the first left block can be any block in the left block set.

Optionally, the calibration unit is further configured to:
calculate a first average side length of the target left block and a second average side length of the target right block;
take a smaller one of the first average side length and the second average side length as the optimal length.

Optionally, the splicing unit is further configured to:
divide the second left-view image and the second right-view image according to LA(x, y) to obtain left original points and the right original points correspondingly;
carry out perspective transformation on each left original point and each right original point to obtain each left transformation point corresponding to each left original point and each right transformation point corresponding to each right original point;
splice left transformation points to obtain a left transformation image, and splice right transformation points to obtain a right transformation image;
splice the left transformation image and the right transformation image to obtain the 3D image.

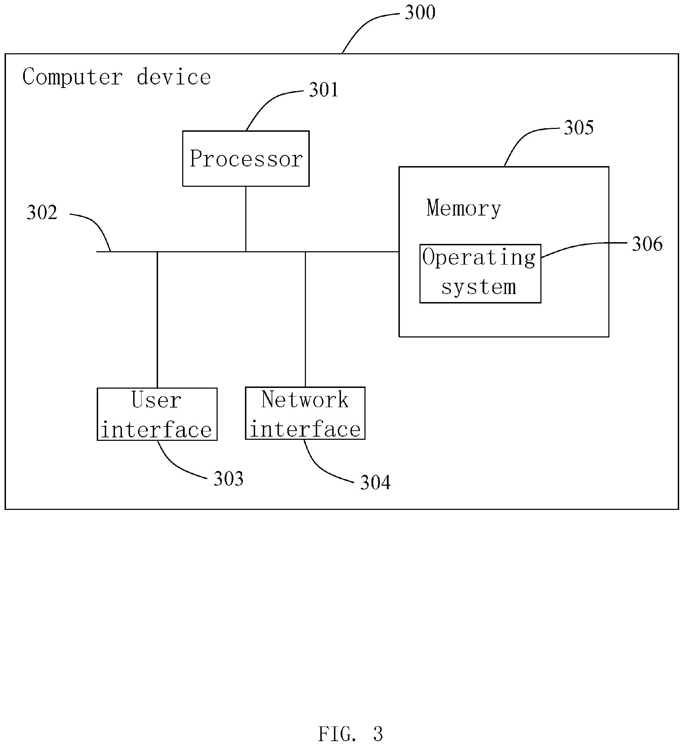

FIG 3 is a schematic diagram of a hardware structure of a server of the present application. As shown in FIG. 3, the server 300 of this embodiment includes at least one processor 301, at least one network interface 304 or another user interface 303, a memory 305, and at least one communication bus 302. The server 300 optionally includes the user interface 303, which can be a display, a keyboard or a clicking device. The memory 305 may be a high-speed RAM memory, or may be a non-volatile memory, such as at least one disk memory. The memory 305 stores execution instructions. When the server 300 is running, the processor 301 communicates with the memory 305, and the processor 301 invokes the instructions stored in the memory 305 to execute the 3D image capturing method described above. A operating system 306 includes various programs for implementing various basic tasks and processing hardware-based tasks.

For the server provided by the embodiments of the present application, the processor 301 can perform the above-mentioned operations of the 3D image capturing method to carry out the 3D image capturing method. The implementation principles and technical effects are similar to the above and will not be repeated here.

Embodiments of the present application also provide a computer-readable medium which stores computer-executable instructions. The computer-executable instructions enable the server to execute the 3D image capturing method described in the above-mentioned embodiments. The implementation principles and technical effects are similar to the above and will not be repeated here.

From the above description of the embodiments, it will be clear to those skilled in the art that the above embodiments of the present application can be implemented by means of software plus the necessary common hardware platform. Of course, they can also be implemented by dedicated hardware including dedicated integrated circuits, dedicated CPUs, dedicated memories, and dedicated components. In general, functions performed by computer programs can be easily realized with corresponding hardware. Moreover, the specific hardware structures used to implement the same function can be various, such as analog circuits, digital circuits or dedicated circuits. etc. However, software program is preferred for the implementation of the present application in most cases. Based on this understanding, the technical solutions of the present application can be embodied in the form of software products in essence or the part that contributes to the prior art. The computer software product is stored in a readable storage medium, such as a computer floppy disk, a U disk, a mobile hard disk, a read-only memory (ROM), a random access memory (RAM), a magnetic disk or an optical disk, etc., and includes several instructions to make a computer device (which can be a personal computer, a server, or a network device, etc.) execute the methods described in various embodiments of the present application.

The above-described embodiments may be implemented in whole or in part by software, hardware, firmware or any combination thereof. When being implemented in software, it can be implemented in whole or in part in the form of a computer program product.

A computer program product includes one or more computer instructions. When computer program instructions are loaded on and executed by a computer, the flows or functions according to embodiments of the present application is generated in whole or in part. The computer may be a general purpose computer, a special purpose computer, a computer network, or another programmable device. The computer instructions can be stored in a computer-readable storage medium, or be transferred from one computer-readable storage medium to another. For example, computer instructions may be transmitted from one Web site, computer, server, or data center to another Web site, computer, server, or data center with a wired (e.g. a coaxial cable, an optical fiber, a digital subscriber line (DSL)) or wireless (e.g. infrared, wireless, microwave, etc.) way. The computer-readable storage medium may be any available medium that a computer can access or a data storage device such as a server, a data center, etc. containing one or more available media. Available media may be magnetic media (e.g. floppy disks, storage disks, magnetic tapes), optical media (e.g. DVD), or semiconductor medias (e.g. Solid State Disks (SSD)), etc..

## Claims

1. A 3D image capturing method applied to a mobile device with a camera and a target peripheral, **characterized by** comprising:
capturing a calibration target through the camera, and obtaining a first left image and a first right image with a lens of the target peripheral;
performing a calibration operation on the mobile device according to the first left-view image and the first right-view image;
obtaining a second left-view image and a second right-view image by employing the camera to capture a target scene; and
splicing the second left-view image and the second right-view image to obtain a 3D image.

2. The 3D image capturing method according to claim 1, **characterized in that** the capturing the calibration target through the camera, and obtaining the first left image and the first right image with the lens of the target peripheral comprises:
capturing the calibration target through the camera;
generating a left image and a right image through refraction of the lens of the target peripheral;
determining whether a whole of the calibration target is presented in the left image and the right image, and whether a ratio of a size of an image of the calibration target to a size of the left image and a ratio of the size of the image of the calibration target to a size of the right image are both greater than a preset value; and
in condition that the whole of the calibration target is presented in the left image and the right image, and the ratio of the size of the image of the calibration target to the size of the left image and the ratio of the size of the image of the calibration target to the size of the right image are both are greater than the preset value, taking the left image as the first left-view image and taking the right image as the first right-view image.

3. The 3D image capturing method according to claim 1, **characterized in that** the calibration target is a plate with a calibration pattern which is a checkered pattern, the performing the calibration operation on the mobile device according to the first left-view image and the first right-view image comprises:
detecting left corner points on the first left-view image and right corner points on the first right-view image; a number of the left corner points and a number of the right corner points being both M*N;
dividing an area where the left corner points are located to obtain a left block set and determining a target left block, and dividing an area where the right corner points are located to obtain a right block set and determining a target right block, wherein the target left block looks the most like a square among blocks in the left block set, and the target right block looks the most like a square among blocks in the right block set; and
determining an optimal length according to the target left block and the target right block to calibrate the mobile device.

4. The 3D image capturing method according to claim 3, **characterized in that** the dividing the area where the left corner points are located to obtain the left block set and determining the target left block comprises:
dividing the area where the left corner points are located into (M-1)*(N-1) left blocks according to an LA method and determining coordinates of each left block;
determining a length difference between two adjacent sides of each left block according to the coordinates of each left block, the length difference being not less than 0; and
determining a left block with a minimum length difference to be the target left block.

5. The 3D image capturing method according to claim 4, **characterized in that** the determining the length difference between the two adjacent sides of each left block according to the coordinates of each left block comprises:
calculating the length difference between the two adjacent sides of a first left block according to the following formula: DI=∥P(x, y)-P(x+1, y)|-|P(x, y)-P(x, y+1)∥;
wherein DI represents the length difference between the two adjacent sides of each left block, coordinates of the first left block are LA(x, y)=(P(x, y), P(x+1, y), P(x, y+1), P(x+1, y+1)), 0<x<M, 0<y<N, and the first left block can be any block of the left block set.

6. The 3D image capturing method according to claim 4, **characterized in that** the determining an optimal length according to the target left block and the target right block comprises:
calculating a first average side length of the target left block and a second average side length of the target right block; and
taking a smaller one of the first average side length and the second average side length as the optimal length.

7. The 3D image capturing method according to claim 5, **characterized in that** the splicing the second left-view image and the second right-view image to obtain the 3D image comprises:
dividing the second left-view image and the second right-view image according to the LA method to obtain a left original block set and a right original block set correspondingly;
carrying out perspective transformation on blocks of each left original block set and blocks of each right original block set to obtain each left transformation block corresponding to the blocks of the left original block set and each right transformation block corresponding to the blocks of the right original block set;
splicing left transformation to obtain a left transformation image, and splicing right transformation point blocks to obtain a right transformation image; and
splicing the left transformation image and the right transformation image to obtain the 3D image.

8. A 3D image capturing system **characterized by** comprising a mobile device with a camera and a target peripheral, the target peripheral being installed on the mobile device, the 3D image capturing system further comprising:
the camera configured to capture a calibration target and obtain a first left-view image and a first right-view image with a lens of the target peripheral;
a calibration unit configured to perform calibration operations on the mobile device according to the first left-view image and the first right-view image;
wherein the camera is also configured to capture a target scene to obtain a second left-view image and a second right-view image;
a splicing unit configured to splice the second left-view image and the second right-view image to obtain a 3D image.

9. A computer device **characterized by** comprising:
at least one processor, memory and transceiver connected therewith, wherein the memory is configured to store program codes, and the processor is configured to call the program codes in the memory to execute the 3D image capturing method according to any one of claims 5 to 8.
